Europäisches Patentamt

European Patent Office

Office européen des brevets

(11) Publication number: **0 266 138 B1**

(12) **EUROPEAN PATENT SPECIFICATION**

(45) Date of publication of patent specification: **19.02.92**    (51) Int. Cl.⁵: **G01V  1/16**

(21) Application number: **87309390.0**

(22) Date of filing: **23.10.87**

(54) **Three-axis sensor.**

(30) Priority: **29.10.86 US 924679**

(43) Date of publication of application:
**04.05.88 Bulletin  88/18**

(45) Publication of the grant of the patent:
**19.02.92 Bulletin  92/08**

(84) Designated Contracting States:
**BE CH DE ES FR GB GR IT LI NL SE**

(56) References cited:
**US-A- 3 690 014**
**US-A- 3 891 050**
**US-A- 4 021 774**
**US-A- 4 525 819**

**Prospectus "LRS-1023", Western Atlas International, Inc. 1984, 3 M L 90-010 Rev. 5-90**

(73) Proprietor: **Western Atlas International, Inc.**
**10,001 Richmond Avenue**
**Houston Texas 77252(US)**

(72) Inventor: **McNeel, William O.**
**9411 Neff**
**Houston Texas 77036(US)**
Inventor: **Sackett, James A.**
**11919 N.W. Freeway No. 902**
**Houston Texas 77092(US)**
Inventor: **Wood, Joe N.**
**12327 Bexley**
**Houston Texas 77099(US)**
Inventor: **Soliz, Julian**
**Route 2 Box 2368**
**Pearland Texas 77584(US)**

(74) Representative: **Godsill, John Kenneth et al**
**Haseltine Lake & Co. Hazlitt House 28 Southampton Buildings Chancery Lane**
**London WC2A 1AT(GB)**

## Description

This invention relates to seismic sensors and particularly to a device for detecting seismic signals along mutually orthogonal axes.

In seismic exploration, a seismic source such as a vibrator or an explosive charge, introduces a seismic signal into the earth. The seismic signal propagates through the earth from the point of introduction as an expanding spherical wave front. As the wave front impinges upon textural or structural changes in the subsurface , a portion of the wave front may be reflected back to the surface. The reflected seismic signals that arrive at the surface may be detected by seismic sensors such as geophones deposited on the land or hydrophones deployed in water-covered environments.

The seismic signals originating from the source and reflected back to the surface typically include several types of seismic waves, each having distinguishing characteristics from the others. The types of seismic waves include compressional and shear waves, generally referred to as body waves, and two types of surface waves known as Raleigh waves and Love waves. Compressional waves and shear waves, commonly referred to as primary (P) and secondary (S) waves respectively, are of particular interest to exploration geophysicists, because they propagate at different velocities, and because they propagate to great depths unlike the surface waves.

Compressional and shear waves each have a distinct particle motion. In compressional waves, the particle motion of a propagating wave consists of alternating condensations and rarefractions during which adjacent particles of the propagating medium move closer together and further apart. The motion of the particles in a compressional wave is therefore always in the direction of wave propagation. In a shear wave, particle motion consists of undulations parallel to the wave front where the particle motion is always perpendicular to the direction of wave propagation. If during the propagation of a shear wave, the particles all undulate in parallel lines, the wave is said to be polarized in a direction of the undulations. A horizontally-traveling shear wave polarized so that the particle motion is all vertical is designated as an SV or vertical shear wave; when its particle motion is all horizontal, it is called an SH or horizontal shear wave. Shear waves may be polarized in planes other than the vertical and the horizontal but for the purposes of study, their components may be resolved in horizontal and vertical planes.

Because of the different particle motion and propagation velocities of the two wave types, compressional wave and shear waves are important in determining the characteristics of the subsurface.

The two-wave types are used to "fingerprint" the propagation characteristics of the subsurface formations. These characteristics of the subsurface may be measured by placing sensors along the surface of the earth or by placing sensors at different depths in a bore hole.

In the past, detection of the two body waves has been accomplished by using conventional geophones. The geophones were placed on the ground with their single axis of sensitivity oriented either horizontally to detect shear waves, or vertically to detect the compressional waves. Each sensor had to be properly placed on the ground to assure proper orientation with respect to the propagation direction of the desired signal to be detected. This was particularly true for sensors used to detect frequencies 14 Hertz (Hz) or less. The low frequency sensors would become inoperable at tilt angles of 5 degrees or more.

In later detectors, three sensors were mounted to a single chassis such that the axes of sensitivity for the sensors were fixed 90 degrees to each other. Thus, one unit consisting of three sensors could be used to detect both compressional waves and shear waves. The same problem of orientation existed in this sensor as it did for a single sensor. The sensors must be properly oriented so that the axes were both vertical and horizontal, so that each wave type could be detected.

Similar problems existed in vertical seismic arrays where the sensor was deployed in the borehole. Boreholes are not perfectly cylindrical. There are irregularities in the borehole diameter as well as inclination. Often sensors disposed in boreholes assumed orientations other than vertical or horizontal when wedged tightly against the side of the borehole.

In this connection, U.S.-A-4021774 discloses a bore hole sensor having a three axis gimbal for determining a vertical plane and a horizontal plane using gravity as a reference and the north direction using the earth's magnetic field as reference. The sensors are motor driven to the correct positions about the axis and error transducers determine any deviation and provide feedback to the motor system for realignment. This is a relatively complex arrangement.

A simpler proposal, and an attempt to solve the problem of tilted sensors in a borehole is found in a borehole geophone of Type LRS-1023 marketed by Western Atlas International, Inc. In that geophone, three sensors are mounted in a casing, two on a trunnion. One, fixed, sensor is mounted vertically and the two trunnioned sensors are mounted horizontally, but at 90 degrees to each other. As the sensor case is inclined by a small amount when forced against the borehole wall, the two trunnioned sensors are supposed to hang vertically in the proper orientation so as to detect both the compressional and shear waves. A major disadvantage in this arrangement is that the horizontal sensors do not remain orthogonal to each other when tilted. The horizontal sensors would be orthogonal with the housing oriented vertically but, as it is inclined, the two horizontal sensors assume orientations where their axes are not 90 degrees to each other. If the housing were to be oriented horizontally and the sensors allowed to pivot freely, which they are not, they could even become substantially parallel to each other and thus detect the same signals.

A trunnioned individual sensor is also known from U.S.-A-4525819.

According to one aspect of the present invention, there is provided apparatus for receiving seismic signals comprising: a housing having a longitudinal axis and having two pivotally mounted seismic sensors with orthogonal axes of sensitivity in a predetermined orientation of said longitudinal axis, characterised in that there are respective gimbal mounting means for mounting the two sensors in said housing, each of said gimbal mounting means having an outer portion pivotally coupled to said housing about a first pivot axis at right angles to said longitudinal axis and an inner portion pivotally coupled to the outer portion about a second pivot axis at right angles to said first pivot axis and said longitudinal axis, the first pivot axes of each of said gimbal mounting means being contained in a common plane passing through the housing and containing the longitudinal axis of the housing, whereby the axes of sensitivity of the sensors remain orthogonal with respect to each other as the orientation of the housing is changed.

It is thus possible to detect seismic signals along a plurality of mutually orthogonal axes, to detect the seismic signals using conventional sensors comprising at least two gimbally mounted in a housing, to maintain the orthogonality of said sensors' axes of sensitivity and the relative orientation with respect to the gravity while an external housing or tool is oriented at substantially any angle.

In one embodiment of this invention, a plurality of seismic sensors, such as geophones or accelerometers, is gimbally mounted in a housing. The axis of sensitivity for each sensor is oriented such that each is orthogonal to the others. The orthogonality of the sensor axes is maintained at substantially any orientation of the housing by mounting the outer pivot axis of each gimbal parallel to the outer pivot axes of the other gimbals. The gimbal arrangement also allows the axes of sensitivity to remain in orthogonal planes with respect to gravity.

In a modification of that embodiment, at least one sensor is mounted horizontally on a single axis gimbal or trunnion and its axis of sensitivity is perpendicular to the pivot axis. The pivot axis of the trunnion is parallel or coplanar with the outer pivot axes of the other gimbals in the assembly. The coplanar orientation of the outer pivot axes insures that the sensors will maintain their orthogonality with each other. The trunnion mounting preserves the horizontal attitude of the axis of sensitivity as the housing is inclined.

One possibility is for there to be electrical connections with the sensors made through slip-rings mounted at the gimbal pivot-axes instead of by separate wire conductors.

Mechanical stops may be added to the gimbals to prevent each from rotating freely 360 degrees about each pivot axis, insuring that the sensors will not become indeterminate above a predetermined critical angle.

For a better understanding of the invention and to show how the same may be carried into effect, reference will now be made by way of example, to the accompanying drawings, wherein:

Figure 1 is a general illustration of a seismic survey;

Figure 2 is a general illustration of a vertical seismic survey;

Figure 3 is a generalized diagram of a sonde for use in vertical seismic surveying;

Figures 4 A-C are cross-sectional views of a transducer assembly; and

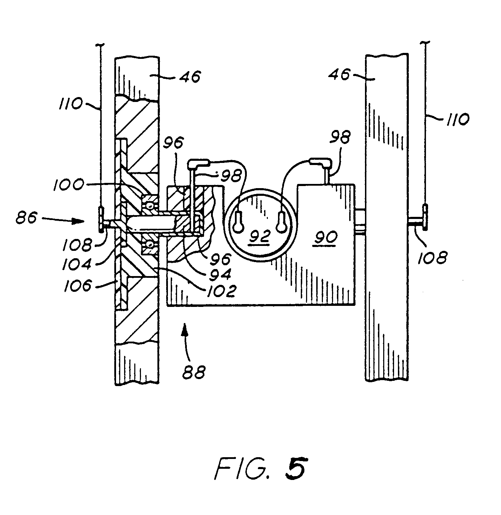

Figure 5 is an alternate embodiment of a gimbal which may be used in the assembly.

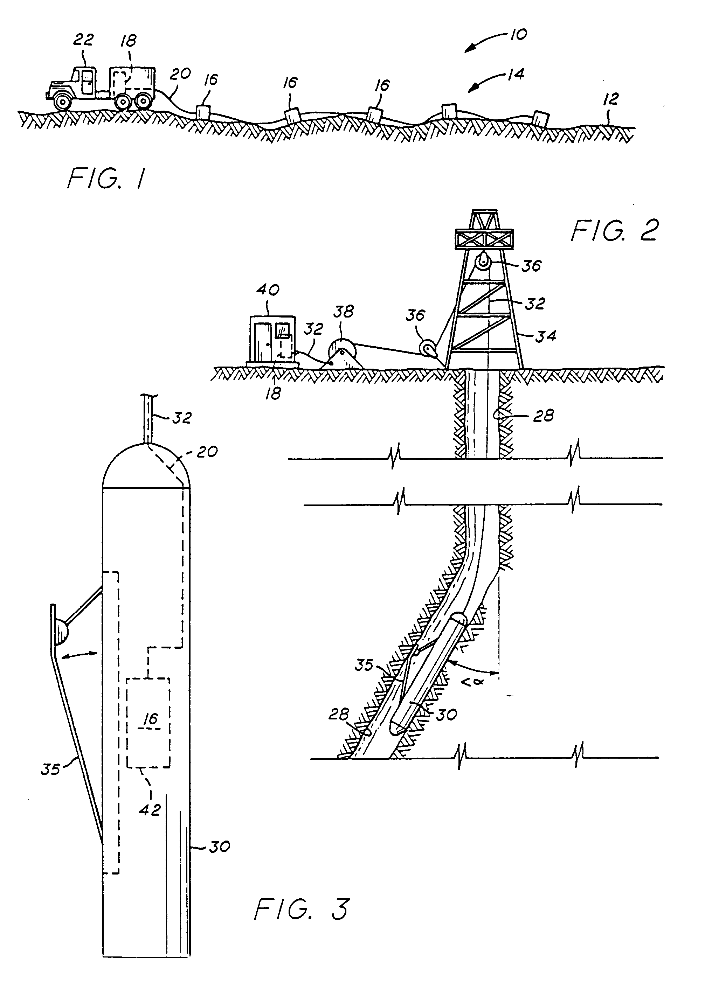

In reference to the Figures, like reference numerals indicate like components, wherein Figure 1 is a general illustration of a seismic survey 10 defined along the surface of the earth 12 by a seismic detector system generally indicated as 14. The seismic detector system may include a plurality of transducer assemblies 16 deposited along the surface of the earth at predetermined intervals, each interconnected to a remote recording unit 18 by a predetermined length of cable 20. The remote recording unit 18 may be mounted on a vehicle such as 22 for portability. A seismic source at or near the surface 12, generates a seismic signal which may readily radiate from the point of introduction as an expanding wave front. The seismic signal is partially reflected from subsurface irregularities in structure or composition of the rock where it is received at the surface 12 by the plurality of transducer assemblies 16. The transducer assemblies 16 may convert the kinetic energy of the received seismic signal to electrical or optical signals which are transmitted over the cable 20 to the remote recording unit 18.

Figure 2 is a general illustration of a vertical seismic survey conducted in a well or borehole 28. The borehole 28 may include a predetermined portion thereof 28' which deviates from the vertical at an angle ($\alpha$).

A sonde 30 may be disposed in the borehole 28 (28') at a predetermined depth by a length of cable 32 suspended from a support 34 such as a derrick or hoist positioned thereabove. The sonde 30 may be urged against the side of the borehole 28 by an adjustable caliper or anchor 35 mechanically activated from within the sonde 30. The portion of the cable proximate the top of the borehole 28 may pass around pulleys 36 and be wound on a drawworks 38. The cable 32 may be interconnected through the drawworks 38 to the remote recording unit 18 which may be contained in a portable building typically termed a dog house 40.

Figure 3 is a generalized diagram of the sonde 30 which may contain one or more transducer assemblies 16. The transducer assembly 16 may be interconnected to the remote recording unit 18 at the surface by a conductor cable such as 20 which may be an integral part of cable 32. In Figure 3, transducer assembly 16 is illustrated as having an elongate housing 42 to fit within the diameter of the sonde 30. Although it is preferred that the housing be elongate, it is not necessary. Other components in the sonde 30 may include radioactive sources and detectors, electrical or resistivity sensing equipment, and other components typically associated with well-logging tools.

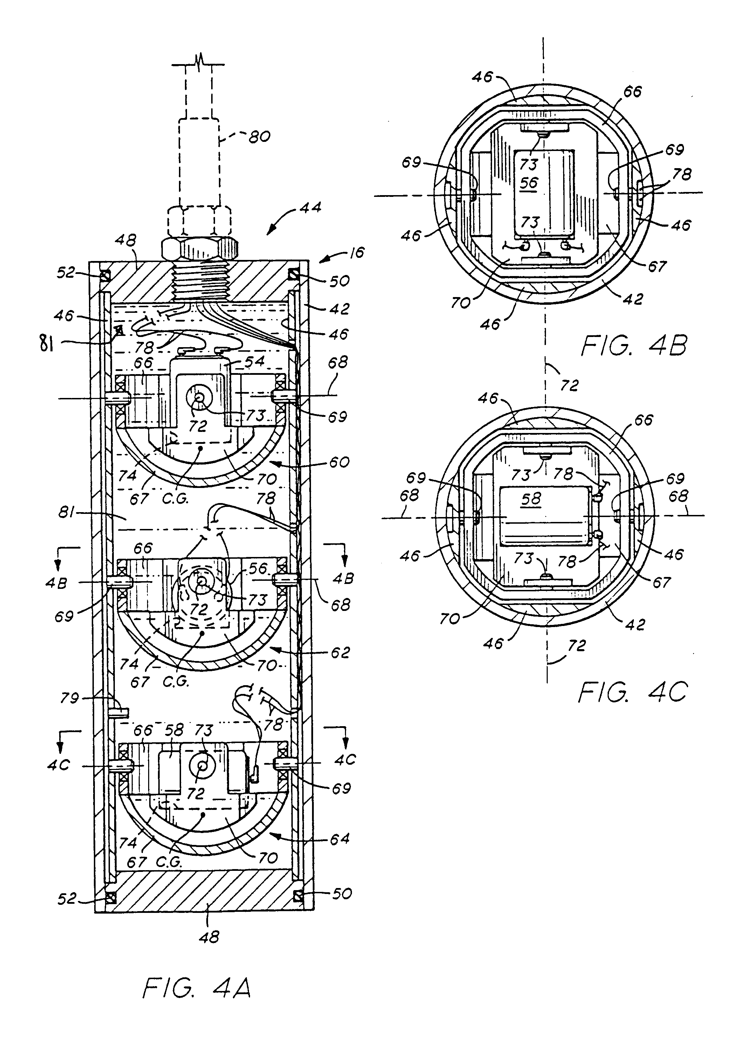

Figures 4 A-C are views in partial cross section of the transducer assembly 16 as depicted in Figure 3 wherein Figure 4A the transducer assembly 16 is enclosed by a housing 42. The housing 42 may be manufactured from brass or other non-magnetic, high-strength material. The housing 42 may receive a frame or chassis 44 having a plurality of supports 46 such as four which may be interconnected to each other by end members 48. Alternatively, support 46 may be a unitary chassis manufactured from a cylinder having an outside diameter substantially equal to the inside diameter of housing 42. End members 48 close the ends of the housing 42. O-rings 50 may be received by channels 52 located about end members 48 to form a seal with an inner surface of the housing 42.

Disposed within the frame 44 are at least two, but preferrably three seismic sensors 54, 56 and 58 such as geophones or accelerometers. As is well known, geophones typically have a single axis of sensitivity related to the longitudinal axis of the internal moving coil or magnet. Each sensor 54-58 may be mounted on a dual-axis gimbal such as 60, 62, 64 which in turn may be mounted vertically between the supports 46. Each gimbal 60-64 may include an outer table 66 having an outer-pivot axis 68 defined by pins 69 coupled to the supports 46. Each outer table 66 may have a counter weight 67 diametrically disposed thereunder and meeting the outer table at the junction of each pin 69. The counter weight 67 places the center of gravity (CG) of the outer table at a point substantially below the outer-pivot axis 68. This provides a greater restoring force to the outer table to maintain a horizontal position with respect to gravity. Each gimbal may also have an inner table 70 with an inner-pivot axis 72 rotated 90 degrees from pivot axis 68 and defined by pins 73 extending into the outer table 66. The inner table 70 is designed so that much of its mass is substantially below the inner-pivot axis 72. Each sensor 54-58 may be received within a seat 74 defined in the top of inner table 70. The seat is preferrably deep enough such that one half or more of each sensor 54-58 is located below the outer- and inner-pivot axes 68 and 72 respectively. This aids in keeping the center of gravity (CG) of the inner table below the inner-pivot axis to provide a greater restoring force (longer arm on a fulcrum) to maintain its horizontal orientation with respect to gravity. In any case, each gimbal may rotate freely about each pivot axis. Ease of rotation about each pivot axis may be increased by bearings around each pin.

Sensors 54-58 may be mounted on the inner tables 70 of each gimbal 60-64 such that the axes of sensitivity of the three sensors are orthogonal to each other as seen in Figures 4B and 4C. Thus, it is preferred to orient the axis of sensitivity for sensor 54 vertically and the axes of sensitivity for sensors 56 and 58 horizontally; sensor 56 perpendicular to the outer-pivot axis 68 and sensor 58 parallel to the outer-pivot axis 68. This orientation provides the preferred orthogonality of the axes of sensitivity. It is important to note that the gimbals 60-64 are mounted to chassis 44 such that the outer-pivot axes 68 are aligned in the same vertical plane and parallel to each other.

Referring back to Figure 4A, each sensor 54, 56 and 58 may be operably coupled by a conductor pair such as 78 to a connector 80 which may be located in one of the end members 48. The conductor pairs 78 preferably run from the connector 80 along one of the longitudinal supports 46 to a location proximate each respective gimbal axis 68. A service loop of conductors 78 may extend from the support 46 to the sensors 54-58 so as to provide an ample length of conductor to allow the gimbal to pivot freely about its axes. Mechanical stops such as pins 79 may be added to the gimbals to prevent the gimbals from swinging 360 degrees about their pivot axes and breaking the service loops. The stops also insure that the sensors do not become indeterminate above some predetermined critical tilt angle in the plane of the outer pivot axes 68.

In another embodiment of the instant invention, gimbal 62 may be a trunnion 88. The single pivot axis would be identical to pivot axis 68 mentioned previously. Sensor 56 may be horizontally mounted with its axis of sensitivity oriented perpendicular to the pivot axis. The trunnion may be limited to 180 degrees or less of rotation by means of mechanical stops mentioned above.

In yet another embodiment of this invention, the conductor service loop 78 may be exchanged for slip-rings such as shown in Figure 6. For purposes of illustration, slip-ring conductors 86 are shown on a trunnion 88 mounted between two supports 46. Pivot table 90, having a horizontally disposed sensor such as 92, contains oppositely extending pins 94 mounted in an insulator 96. Two conductor pins 98 surrounded by the insulator 96 extend into the pivot table 90 and intersect the pins 94. The conductor pins 98 are electrically coupled to the appropriate poles on the sensor 92. The free ends of pins 94 may be received by a bearing 100 supported in a housing 102 contained in each support 46. A slip contact 104 may engage the free end of each pin 94 extending through the bearing 100 and held tightly there against by a non-conducting cap 106. The slip-contact 104 may have a solder cup or conductor pin 108 extending therefrom and through cap 106 which may receive a conductor wire 110. Although a trunnion 88 gimbal is shown in Figure 6, it is understood that substantially the same principle may be used on a dual-axis gimbal as used in this invention.

Filling the housing 42 and surrounding the enclosed sensors 54-58 may be oil 81. It is preferred that oil 81 be nonconductive and have a viscosity approximately equal to 12,000 centipoise (cp) at 22 degrees Celsius ($^{\circ}$C) and have a service temperature ranging from approximately -40$^{\circ}$C to 260$^{\circ}$C. The oil 81 reduces the noise floor or "ringing" produced by the sensors by damping the swinging motion of the gimbals. The oil also acts as a high-frequency coupler of the sensors to the housing. Without the oil the sensors are only coupled to the housing by way of the gimbals which tend to attenuate the high frequencies.

In operation, the individual transducer assemblies 16 may be deposited along the surface of the earth 12 as shown in Figure 1. Coupling of each sensor to the ground may be increased by using spikes coupled to the housing exterior and inserted into the earth. The transducer assemblies 16 may also be incorporated in a sonde such as 30 and deployed in a borehole at a predetermined depth. The sonde may be urged tightly against the borehole wall by well-known means such as calipers or locking arms.

In each of the configurations provided above, as the housing 42 is inclined along any plane, gravitational forces act upon each gimbal such that the center of gravity (CG) of each table in a gimbal assumes its lowest point or energy level. Each gimbal is substantially identical and mounted to the chassis such that the pivot axes are in common planes; each responds identically to the tilt of the housing. Since the sensors were mounted to the gimbals with their axes of sensitivity orthogonal to each other, they will remain so because of the identical response of each gimbal to gravity.

## Claims

1. Apparatus (16) for receiving seismic signals comprising: a housing (44) having a longitudinal axis and having two pivotally mounted seismic sensors (54-58) with orthogonal axes of sensitivity in a predetermined orientation of said longitudinal axis, characterised in that there are respective gimbal mounting means (60-64) for mounting the two sensors (54-58) in said housing (44), each of said gimbal mounting means (60-64) having an outer portion (66) pivotally coupled to said housing about a first pivot axis (68) at right angles to said longitudinal axis and an inner portion (70) pivotally coupled to the outer portion (66) about a second pivot axis (72) at right angles to said first pivot axis (68) and said longitudinal axis, the first pivot axes (68) of each of said gimbal mounting means (60,62,64) being contained in a common plane passing through the housing (42,44) and containing the longitudinal axis of the housing, whereby the axes of sensitivity of the sensors remain orthogonal with respect to each other as the orientation of the housing is changed.

2. An apparatus as claimed in claim 1, and comprising a third pivotally mounted seismic sensor (56,92) with its axis of sensitivity orthogonal to the axes of sensitivity of said two sensors (54,58) in said predetermined orientation.

3. An apparatus as claimed in claim 2, wherein the third sensor (56,92) has mounting means (62,84) pivotally coupled to the housing to give the sensor a single pivot axis (68), which axis is at right angles to said longitudinal axis and is contained in said common plane.

4. An apparatus as claimed in claim 2, wherein the third sensor (56) has two degrees of freedom in that its mounting means comprises an outer portion (66) pivotally mounted about the first axis and an inner portion (70) pivotally coupled to the outer portion about a second pivot axis (72) at right angles to the first pivot axis (68).

5. An apparatus as claimed in claim 1, 2, 3 or 4, and including means (78) for operably coupling said sensors (54-58) to a remote recording unit (18).

6. An apparatus as claimed in claim 5, wherein the means (78) for operably coupling is provided by a plurality of conductors interconnecting each of the sensors (54-58) to the remote recording unit (18).

7. An apparatus as claimed in claim 5 or 6, wherein the means for operably coupling said sensors (54-58) to said remote recording unit (18) comprises at least two slip ring conductors (86) on the first axis of the gimbal mounting means (60-64); a plurality of conductors (48, 98) operably coupling the sensors (54-58) to the slip-ring conductors; and a plurality of conductors (110) operably coupling the slip-ring conductors to the remote recording unit (18).

8. An apparatus as claimed in any one of the preceding claims, and including a substantially incompressible and viscous fluid (81) substantially filling said housing (44) for coupling each of said sensors (54-58) to said housing.

9. An apparatus as claimed in any one of the preceding claims, wherein said seismic sensors (54-58) are accelerometers.

10. An apparatus as claimed in any one of claims 1 to 8, wherein said seismic sensors (54-58) are geophones.

11. An apparatus as claimed in any one of claims 1 to 10, wherein each gimbal mounting means (60-64) has the outer portion (66) provided by a first table pivotally coupled to the housing (44) perpendicular to the longitudinal axis of the housing (44) and having a centre of gravity (C.G.) substantially below the first pivot axis (68), and the inner portion (70) provided by a second table concentrically disposed within the first table and pivotally coupled to the outer table perpendicular to the first axis, the second table having a centre of gravity substantially below the first and second pivot axes.

**Revendications**

1. Dispositif (16) pour recevoir des signaux sismiques comprenant: un boîtier (44) comprenant un axe longitudinal et comportant deux capteurs sismiques montés à rotation (54 - 58) ayant des axes de sensibilité orthogonaux dans une orientation prédéterminée dudit axe longitudinal, caractérisé en ce qu'il y a des moyens de montage à cardan respectifs (60 - 64) pour le montage de deux capteurs (54 - 58) dans ledit boîtier (44), chacun desdits moyens de montage à cardan (60; 64) comprenant une partie extérieure (66) couplée à rotation audit boîtier autour d'un premier axe de pivot (68), perpendiculairement audit axe longitudinal et une partie intérieure (70) montée à rotation sur la partie extérieure (66) autour d'un second axe de pivot (72) perpendiculairement audit premier axe de pivot (68) et audit axe longitudinal, les premiers axes de pivot (68) de chacun desdits moyens de montage à cardan (60, 62, 64) étant contenus dans un plan commun traversant le boîtier (42, 44) et contenant l'axe longitudinal du boîtier, de manière que les axes de sensibilité des capteurs restent orthogonaux l'un par rapport à l'autre lors d'une modification de l'orientation du boîtier.

2. Un dispositif selon la revendication 1, et comprenant un troisième capteur sismique monté à rotation (56, 92), ayant son axe de sensibilité orthogonal aux axes de sensibilité desdits deux capteurs (54, 58) dans ladite orientation prédéterminée.

3. Un dispositif selon la revendication 2, dans lequel le troisième capteur (56, 92) comprend des moyens de montage (62, 84) couplés à rotation avec le boîtier, pour donner au capteur un axe de pivot unique (68), ledit axe étant perpendiculaire audit axe longitudinal et étant contenu dans ledit plan commun.

4. Un dispositif selon la revendication 2, dans lequel le troisième capteur (56,) à trois degrés de liberté, en ce que ses moyens de montage comprennent une partie extérieure (66) montée à rotation autour du premier axe et une partie intérieure (70) couplée à rotation à la partie extérieure autour d'un second axe de pivot (72), perpendiculaire au premier axe de pivot (68).

5. Un dispositif selon la revendication 1, 2, 3 ou 4, et comprenant des moyens (78) couplan fonctionnellement lesdits capteurs (54 - 58) à une unité d'enregistrement à distance (18).

6. Un dispositif selon la revendication 5, dans lequel les moyens (78) de couplage fonctionnel sont fournis par une pluralité de conducteurs interconnectant chaque capteur (54 - 58) à l'unité d'enregistrement à distance (18).

7. Un dispositif selon la revendication 5 ou 6, dans lequel les moyens couplant fonctionnellement lesdits capteurs (54 - 58) à ladite unité d'enregistrement à distance (18) comprennent au moins deux conducteurs à bague collectrice sur le premier axe des moyens de montage a cardan (60; 64); une pluralité de conducteurs (48, 98) pour coupler fonctionnellement les capteurs (54; 58) aux conducteurs à bague collectrice; et une pluralité de conducteurs (110) couplant fonctionnellement les conducteurs à bague collectrice à l'unité d'enregistrement à distance (18).

8. Un dispositif selon l'une quelconque des précédentes revendications, et comprenant un fluide sensiblement incompressible et visqueux (81) remplissant sensiblement ledit boîtier (44) pour coupler chacun desdits capteurs (54; 58) audit boîtier.

9. Un dispositif selon l'une quelconque des précédentes revendications, dans lequel lesdits capteurs sismiques (54; 58) sont des accéléromètres.

10. Un dispositif selon l'une quelconque des précédentes revendications 1 à 8, dans lequel lesdits capteurs sismiques (54 - 58) sont des géophones.

11. Un dispositif selon l'une quelconque des précédentes revendications 1 à 10, dans lequel chaque moyen de montage à cardan, (60 - 64) a la partie extérieure (66) pourvue d'un premier support monté à rotation sur le boîtier (44), perpendiculairement à l'axe longitudinal du boîtier (44) et dont le centre de gravité (C.G.) est sensiblement au dessous du premier axe de pivot (68), et la partie intérieure (70) pourvue d'un second support disposé concentriquement dans le premier support, et couplé à rotation au support extérieur, perpendiculairement au premier axe, le second support ayant un centre de gravité sensiblement au dessous des premier et second axes de pivot.

**Patentansprüche**

1. Gerät (16) zum Empfangen seismischer Signale, mit:
einem Gehäuse (44) mit zwei darin schwenkbar gelagerten seismischen Sensoren (54-58) mit zueinander rechtwinkligen Empfindlichkeitsachsen in einer vorgegebenen Orientierung zur Gehäuse-Längsachse, **dadurch gekennzeichnet,** daß die zwei Sensoren (54-58) im Gehäuse (44) jeweils durch kardanische Lager gehalten sind, wobei jedes kardanische Lager (60-64) einen äußeren Teil (66), der um eine erste Schwenkachse (68) unter rechtem Winkel zur Längsachse schwenkbar mit dem Gehäuse verbunden ist, und einen inneren Teil (70) aufweist, der um eine zweite Schwenkachse (72) unter rechtem Winkel zur ersten Schwenkachse (68) und zur Längsachse schwenkbar mit dem äußeren Teil (66) verbunden ist, wobei die ersten Schwenkachsen (68) jedes kardanischen Lagers (60, 62, 64) in einer gemeinsamen Ebene durch das Gehäuse (42, 44) unter Einschluß der Gehäuse-Längsachse liegen derart, daß die Empfindlichkeitsachsen der Sensoren rechtwinklig zueinander bleiben, wenn die Ausrichtung des Gehäuses geändert wird.

2. Gerät nach Anspruch 1, das einen dritten schwenkbar gelagerten seismischen Sensor (56, 92) aufweist, dessen Empfindlichkeitsachse rechtwinklig zu den Empfindlichkeitsachsen der zwei Sensoren (54, 58) in der vorgegebenen Ausrichtung steht.

3. Gerät nach Anspruch 2, bei dem der dritte Sensor (56, 92) eine Lagereinrichtung (62, 84) aufweist, die schwenkbar mit dem Gehäuse verbunden ist, so daß dieser Sensor eine einzige Schwenkachse (68) aufweist, die unter rechtem Winkel zur Längsachse steht und in der gemeinsamen Ebene liegt.

4. Gerät nach Anspruch 2, bei dem der dritte Sensor (56) dadurch zwei Freiheitsgrade aufweist, daß seine Lagereinrichtung einen äußeren Teil (66), der um die erste Achse schwenkbar gelagert ist, und einen inneren Teil (70) aufweist, der um eine zweite Schwenkachse (72) unter rechtem Winkel zur ersten Schwenkachse (68) schwenkbar mit dem inneren Teil (70) verbunden ist.

5. Gerät nach einem der Ansprüche 1, 2, 3 oder 4, mit einer Anschlußeinrichtung (78) zum funktionsmäßigen Verbinden der Sensoren (54-58) mit einer Fern-Aufzeichnungseinheit (18).

6. Gerät nach Anspruch 5, bei dem die Einrichtung (78) zum funktionsmäßigen Verbinden durch mehrere Leiter gebildet ist, die jeden der Sensoren (54-58) mit der Fern-Aufzeichnungseinheit (18) verbinden.

7. Gerät nach einem der Ansprüche 5 oder 6, bei dem die Einrichtung zum funktionsmäßigen Verbinder der Sensoren (54-58) mit der Fern-Aufzeichnungseinheit (18) mindestens zwei Schleifringkontakte (86) auf der ersten Achse der kardanischen Lager (60-64), mehrere Leiter (48, 98), die die Sensoren (54- 58) funktionsmäßig mit den Schleifringkontakten verbinden sowie mehrere Leiter (110) aufweist, die die Schleifringkontakte mit der Fern-Aufzeichnungseinheit (18) funktionsmäßig verbinden.

8. Gerät nach einem der vorstehenden Ansprüche, mit einem weitgehend inkompressiblen, viskosen, den wesentlichen Teil des Gehäuses ausfüllenden Fluid (81), umjeden der Sensoren (54-58) mit dem Gehäuse zu verkoppeln.

9. Gerät nach einem der vorstehenden Ansprüche, bei dem die seismischen Sensoren (54-58) Beschleunigungsmesser sind.

10. Gerät nach einem der Ansprüche 1 bis 8, bei dem die seismischen Sensoren (54-58) Geophone sind.

11. Gerät nach einem der Ansprüche 1 bis 10, bei dem jedes kardanische Lager (60-64) einen äußeren Teil (76) mit einem ersten Tisch aufweist, der schwenkbar mit dem Gehäuse (44) rechtwinklig zur Längsachse des Gehäuses (44) verbunden ist und einen Schwerpunkt (C. G.) aufweist, der im wesentlichen unter der ersten Schwenkachse (68) liegt, und einen inneren Teil (70) aufweist, der durch einen zweiten Tisch gebildet ist, der konzentrisch innerhalb des ersten Tisches angeordnet und schwenkbar mit dem äußeren Tisch rechtwinklig zur ersten Achse verbunden ist, wobei der Schwerpunkt des zweiten Tisches im wesentlichen unter der ersten und der zweiten Schwenkachse liegt.

FIG. 1

FIG. 2

FIG. 3

9

FIG. 4A

FIG. 4B

FIG. 4C

FIG. 5